# FASCICULE DE BREVET EUROPEEN

(11) **EP 3 358 090 B1**
(45) Date de publication et mention de la délivrance du brevet: **12.06.2019**
(21) Numéro de dépôt: 18290008.4
(22) Date de dépôt: 19.01.2018
(51) Int. Cl.: E03B 3/03, E03B 11/00

(54) **RÉSERVOIR MODULABLE**
MODULIERBARER TANK
MODULAR RESERVOIR

(30) Priorité: 02.02.2017 FR 1700104
(43) Date de publication de la demande: 08.08.2018
(73) Titulaire: Eaux-Vives, 42370 Renaison (FR)
(72) Inventeur: Bertin, Franck, 42460 Jarnosse (FR)
(74) Mandataire: Gallochat, Alain

(56) Documents cités:
- WO-A1-2009/116881
- BE-A5- 1 020 704
- FR-A1- 2 912 162
- JP-A- S57 163 824

## Description

La présente invention concerne un réservoir modulable.

Différents réservoirs, également dénommés citernes ou cuves, sont connus à ce jour, destinés à recevoir et stocker des liquides, comme par exemple l'eau, notamment les eaux pluviales.

On peut notamment citer le dispositif décrit dans la demande PCT publiée sous n° WO 2009/116881 comprenant deux éléments creux terminaux, fermés à une extrémité munie d'un fond et ouvert à l'autre extrémité. Les documents FR 2912162, JP S57 163824 et BE1020704 décrivent des autres dispositifs pour stocker des liquides.

Les réservoirs connus sont de formes variées, cylindriques, parallélépipédiques, cubiques, et sont réalisés en divers matériaux métalliques, en ciment ou en matière plastique. Ils définissent un volume prédéterminé et le stockage est donc limité par ce volume.

Le réservoir selon l'invention est modulable, ce qui permet à son utilisateur de prévoir le volume en fonction de ses besoins.

Dans sa version de base, le réservoir selon l'invention se compose de deux éléments ajustables ; dans des variantes d'exécution, il est possible d'insérer un ou plusieurs modules intercalaires ajustables entre eux et ajustables aux deux éléments précités.

De façon plus précise, le réservoir selon l'invention comprend deux éléments creux (2) terminaux, de forme cylindrique, fermés à une extrémité (3) munie d'un fond (4) et ouvert à l'autre extrémité (5), cette dernière étant dotée d'une enveloppe semi-cylindrique (6), ouverte à ses deux extrémités (7) et disposée à cheval sur ladite extrémité ouverte (5) sur la moitié de sa circonférence, lesdites extrémités (7) comportant un rabat (8) formant un angle droit par rapport à l'enveloppe semi-cylindrique (6) au niveau de ses extrémités (7).

Selon une variante d'exécution, le réservoir selon l'invention comprend également au moins un élément intermédiaire (9) disposé entre lesdits éléments terminaux (2), chaque élément intermédiaire (9) étant constitué d'un cylindre creux de même diamètre que les éléments terminaux (2), les extrémités ouvertes (10), (11) dudit élément (9) étant dotées d'une enveloppe semi-cylindrique (12), (13) disposée à cheval sur le pourtour desdites extrémités (10), (11), les extrémités (14), (15) comportant un rabat (16), (17) formant un angle droit par rapport auxdites extrémités.

Selon une autre variante d'exécution, le réservoir comprend plusieurs cylindres intermédiaires tels que celui précédemment cité.

Tous ces éléments sont de préférence réalisés en acier ou en une matière plastique rigide, l'acier ou la matière plastique rigide pouvant être ondulé, rainuré ou lisse.

D'autres avantages et caractéristiques apparaîtront à la lecture de la description qui va suivre, référence étant faite aux figures données à titre indicatif et nullement limitatif parmi lesquelles :
- la Figure 1 est une vue de profil des éléments, non assemblés, constituant le réservoir selon une variante d'exécution de l'invention,
- la Figure 2 est une vue de profil en agrandissement de l'élément intermédiaire du réservoir représenté à la Figure 1,
- la Figure 3 est une vue de face, à une échelle différente, de l'élément intermédiaire illustré à la Figure 2, et
- la Figure 4 illustre en perspective le réservoir selon une autre variante d'exécution de l'invention, une fois les éléments assemblés.

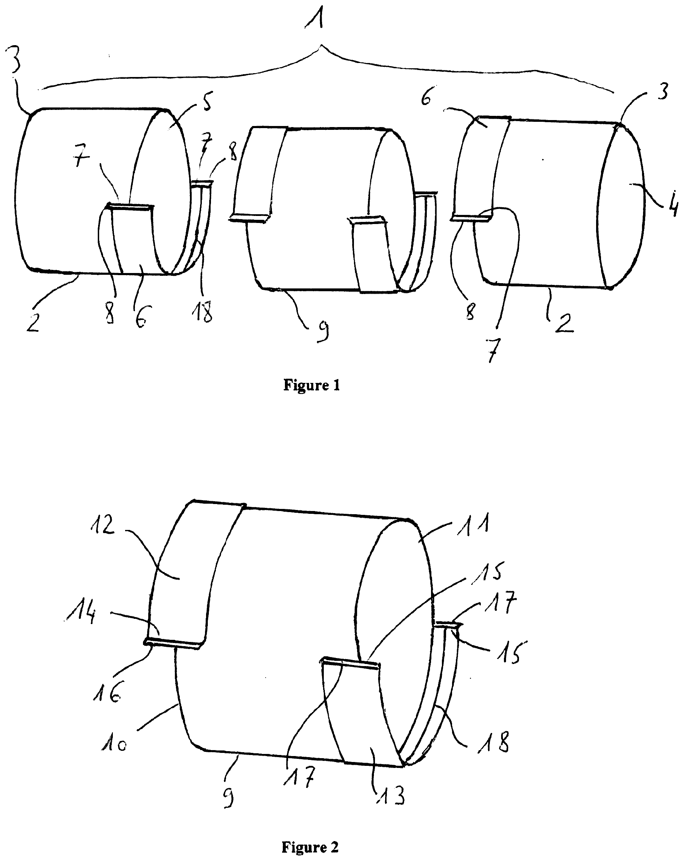

Référence étant faite à la Figure 1, le réservoir (1), selon une variante d'exécution de l'invention, se compose de deux éléments terminaux (2) cylindriques creux dont une extrémité (3) est fermée par un fond (4) et dont l'autre extrémité (5) est ouverte.

L'extrémité ouverte (5) est dotée sur son pourtour d'une enveloppe semi-cylindrique (6), disposée solidairement à cheval sur le pourtour de ladite extrémité ouverte (5) et sur -la moitié de sa circonférence. Chaque enveloppe semi-cylindrique (6) comprend à ses extrémités (7) un rabat (8) formant un angle droit avec lesdites extrémités (7).

Dans la variante illustrée à la Figure 1, le réservoir selon l'invention comprend également, dans cette variante d'exécution, un élément intermédiaire (9) illustré plus en détails à la Figure 2. Cet élément intermédiaire (9) est creux, cylindrique de même diamètre que les éléments terminaux (2), et ses extrémités ouvertes (10), (11) sont dotées d'une enveloppe semi-cylindrique (12), (13) ; de même que l'enveloppe semi-cylindrique (6), les enveloppes semi-cylindriques (12) et (13) sont disposées à cheval sur le pourtour desdites extrémités (10), (11) et sur un peu moins de la moitié de leur circonférence. Ces enveloppes semi-cylindriques (12), (13) sont disposées symétriquement par rapport au centre de l'élément intermédiaire (9). Chaque enveloppe semi-cylindrique (12), (13) comprend à ses extrémités (14), (15), un rabat (16), (17), formant un angle droit avec lesdites extrémités (14), (15).

Les enveloppes semi-cylindriques (6), (12), (13), ainsi que les rabats (8), (16), (17) comportent un ou plusieurs joints (18) en caoutchouc ou autre matière synthétique permettant l'étanchéité lors de la mise en contact des éléments (2) et (9) entre eux ainsi qu'il sera expliqué plus avant dans la présente description.

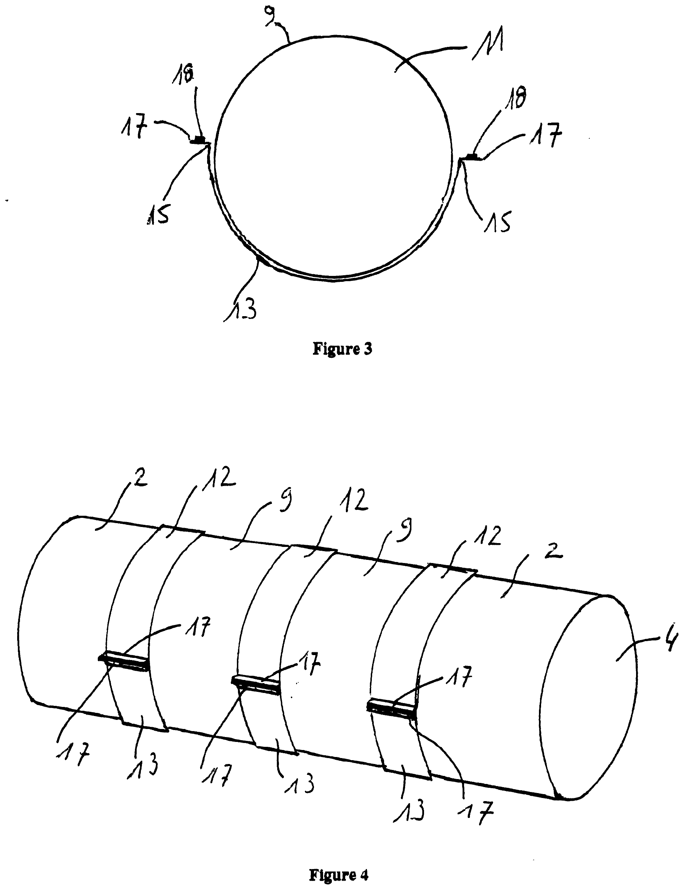

La Figure 3 permet de mieux voir de face l'extrémité (11) de l'élément intermédiaire (9) avec l'enveloppe semi-cylindrique (13) dotée de ses rabats (17) munis du joint d'étanchéité (18). Ces rabats comportent des perforations, non représentées ici, dont le rôle sera précisé ultérieurement.

La Figure 4 représente en vue de profil une variante d'exécution du réservoir selon l'invention comprenant, outre les éléments terminaux (2), deux éléments intermédiaires (9) ; cette Figure 4 illustre ledit réservoir une fois que tous les éléments (2) et (9) ont été assemblés.

L'assemblage des éléments (2) et (9) se fait de la façon suivante ; un élément (2) est imbriqué dans un élément intermédiaire (9) de telle sorte que les deux enveloppes semi-cylindriques (6) et (12) forment une enveloppe cylindrique entourant les extrémités (5) et (10), à cheval sur ces dernières. L'opération est reproduite avec le deuxième élément (2) qui va venir s'imbriquer dans l'élément intermédiaire (9) de telle sorte que les deux enveloppes semi-cylindriques (6) et (13) forment une enveloppe cylindrique entourant les extrémités (5) et (11), à cheval sur ces dernières. Les différents éléments s'emboîtent ainsi parfaitement, les joints d'étanchéité (18) couvrant deux fois 180° assurant alors l'étanchéité des parties couvertes. On procédera alors au boulonnage des rabats (8), (16), (17) grâce à des boulons passant par les perforations pratiquées et précédemment mentionnées.

Comme cela a été indiqué, chacune des enveloppes semi-cylindriques (6), (12) et (13) recouvre un peu moins de la moitié de la circonférence des extrémités (5) (10) et (11) de sorte qu'une fois l'assemblage des éléments (2) et (9) terminé, il reste un espace de 2-3mm entre deux rabats se faisant face ; le boulonnage permettra de réduire cet espace renforçant l'étanchéité grâce aux joints (18) disposés à la fois sur les enveloppes semi-cylindriques (6), (12), (13) et sur les rabats (8), (16), (17).

Dans la variante d'exécution illustrée à la Figure 1, le réservoir selon l'invention comprend deux éléments terminaux (2) et un élément intermédiaire (9). En fonction du volume désiré, d'autres variantes, également couvertes par la présente invention, sont envisageables, soit pour réduire le volume du réservoir (1) en supprimant l'élément intermédiaire (9), soit pour augmenter ledit volume en disposant entre les éléments terminaux (2) plusieurs éléments intermédiaires identiques (9) ; ainsi la Figure 4 illustre le réservoir selon l'invention, assemblé et comportant les éléments terminaux (2) ainsi que deux éléments intermédiaires (9) disposés entre ces derniers.

Des systèmes connus en soi et non représentés ici sont prévus pour l'arrivée et l'évacuation de l'eau, ou autre liquide, contenu dans le réservoir selon l'invention, étant précisé que ce réservoir peut être installé aussi bien en surface qu'enterré, sous espaces verts ou sous voiries lourdes.

## Revendications

1. Réservoir modulable pour recevoir et stocker des liquides, notamment l'eau, du type comprenant deux éléments creux terminaux, fermés à une extrémité munie d'un fond et ouvert à l'autre extrémité, **caractérisé en ce que** lesdits éléments creux terminaux (2) sont de forme cylindrique, ladite autre extrémité (5) étant dotée d'une enveloppe semi-cylindrique (6), ouverte à ses deux extrémités (7) disposée à cheval sur ladite extrémité ouverte (5) sur pratiquement la moitié de sa circonférence, lesdites extrémités (7) comportant un rabat (8) formant un angle droit par rapport à l'enveloppe semi-cylindrique (6) au niveau de ses extrémités (7).

2. Réservoir selon la revendication 1 **caractérisé en ce qu'**il comprend en outre au moins un élément intermédiaire (9) disposé entre lesdits éléments terminaux (2), chaque élément intermédiaire (9) étant constitué d'un cylindre creux de même diamètre que les éléments terminaux (2), les extrémités ouvertes (10, 11) dudit élément (9) étant dotées d'une enveloppe semi-cylindrique (12,13) disposée à cheval sur le pourtour desdites extrémités (10,11), les extrémités (14,15) comportant un rabat (16,17) formant un angle droit par rapport auxdites extrémités.

3. Réservoir selon l'une des revendications 1 ou 2 **caractérisé en ce que** les enveloppes semi-cylindriques (6; 12,13) s'étendent sur un peu moins de la moitié de la circonférence des extrémités (5;10,11) des éléments (2,9), de sort que soit possible de disposer des joints (18) à la fois sur les enveloppes semi-cylindriques (6;12,13) et sur les rabats (8;16,17).

4. Réservoir selon l'une quelconque des revendications 1 à 3 **caractérisé en ce qu'**un joint d'étanchéité (18) est prévu au niveau des enveloppes semi-cylindriques (6;12,13).

5. Réservoir selon l'une quelconque des revendications 1 à 4 **caractérisé en ce qu'**un joint d'étanchéité (18) est également prévu au niveau des rabats (8;16,17).

6. Réservoir selon l'une des revendications 4 ou 5 **caractérisé en ce que** les joints d'étanchéité (18) sont réalisés en caoutchouc ou autre matière synthétique.

7. Réservoir selon l'une quelconque des revendications 1 à 6 **caractérisé en ce que** lesdits rabats (8;16,17) sont munis de perforations permettant leur boulonnage.

8. Réservoir selon l'une quelconque des revendications 1 à 7 **caractérisé en ce que** la longueur desdites enveloppes semi-cylindriques (6;12,13) est telle qu'une fois l'assemblage des éléments terminaux (2) et éventuellement du ou des éléments intermédiaires (9), l'espace entre deux rabats (8;16,17) se faisant face est de 2 à 3mm.

9. Réservoir selon l'une quelconque des revendications 1 à 8 **caractérisé en ce qu'**il est réalisé en acier ou en une matière plastique rigide, l'acier ou la matière plastique rigide pouvant être ondulé, rainuré ou lisse.

## Patentansprüche

1. Modularer Behälter zur Aufnahme und Speicherung von Flüssigkeiten, insbesondere Wasser, umfassend zwei hohle Endelemente, die geschlossen sind an einem Ende, das mit einem Boden versehen ist, und am anderen Ende offen sind, **dadurch gekennzeichnet, dass** die hohlen Endelemente (2) zylindrisch sind, wobei das andere Ende (5) mit einer halbzylindrischen Hülle (6) versehen ist, die an ihren beiden Enden (7) offen ist und rittlings auf dem offenen Ende (5) über nahezu der Hälfte seines Umfangs angeordnet ist, wobei die Enden (7) eine Klappe (8) umfassen, die in Bezug auf die halbzylindrische Hülle (6) auf Höhe ihrer Enden (7) einen rechten Winkel bildet.

2. Behälter nach Anspruch 1, **dadurch gekennzeichnet, dass** er ferner mindestens ein Zwischenelement (9) umfasst, das zwischen den Endelementen (2) angeordnet ist, wobei jedes Zwischenelement (9) aus einem hohlen Zylinder besteht, dessen Durchmesser gleich dem der Endelemente (2) ist, wobei die offenen Enden (10, 11) des Elements (9) mit einer halbzylindrischen Hülle (12, 13) versehen sind, die rittlings über dem Umfang der Enden (10, 11) angeordnet ist, wobei die Enden (14, 15) eine Klappe (16, 17) umfassen, der in Bezug auf die Enden einen rechten Winkel bildet.

3. Behälter nach einem der Ansprüche 1 oder 2, **dadurch gekennzeichnet, dass** die halbzylindrischen Hüllen (6; 12, 13) sich über etwas weniger als die Hälfte des Umfangs der Enden (5; 10, 11) der Elemente (2, 9) erstrecken, sodass Dichtungen (18) sowohl auf den halbzylindrischen Hüllen (6; 12, 13) als auch auf den Klappen (8; 16, 17) angeordnet werden können.

4. Behälter nach einem der Ansprüche 1 - 3, **dadurch gekennzeichnet, dass** eine Verschlussdichtung (18) auf Höhe der halbzylindrischen Hüllen (6; 12, 13) vorgesehen ist.

5. Behälter nach einem der Ansprüche 1 - 4, **dadurch gekennzeichnet, dass** eine Verschlussdichtung (18) ebenfalls auf Höhe der Klappen (8; 16, 17) vorgesehen ist.

6. Behälter nach einem der Ansprüche 4 oder 5, **dadurch gekennzeichnet, dass** die Verschlussdichtungen (18) aus Kautschuk oder einem anderen Kunststoff bestehen.

7. Behälter nach einem der Ansprüche 1 - 6, **dadurch gekennzeichnet, dass** die Klappen (8; 16, 17) mit Perforationen versehen sind, die eine Verschraubung ermöglichen.

8. Behälter nach einem der Ansprüche 1 - 7, **dadurch gekennzeichnet, dass** die Länge der halbzylindrischen Hüllen (6; 12, 13) derart ist, dass bei Montage der Endelemente (2) und ggf. des mindestens einen Zwischenelements (9) der Raum zwischen zwei einander gegenüberliegenden Klappen (8; 16, 17) 2 - 3 mm beträgt.

9. Behälter nach einem der Ansprüche 1 - 8, **dadurch gekennzeichnet, dass** er aus Stahl oder einem harten Kunststoffmaterial besteht, wobei der Stahl bzw. das harte Kunststoffmaterial gewellt, geriffelt oder glatt sein kann.

## Claims

1. Modular tank for receiving and storing liquids, especially water, of the type comprising two terminal hollow elements, closed at one end by a bottom and open at the other end, **characterized in that** the terminal hollow elements (2) are of cylindrical shape, while the other end (5) is provided with a semi-cylindrical casing (6), open at its two ends (7) and arranged astride the open end (5) over practically half of its circumference, wherein the ends (7) have a flap (8) forming a right angle with respect to the semi-cylindrical casing (6) at its ends (7).

2. Tank according to claim 1 **characterized in that** it further comprises at least one intermediate element (9) arranged between the end elements (2), wherein each intermediate element (9) consists of a hollow cylinder of the same diameter as the end elements (2), while the open ends (10, 11) of the element (9) are provided with a semi-cylindrical casing (12, 13) arranged astride the periphery of the ends (10, 11), wherein the ends (14, 15) have a flap (16, 17) at right angles to the ends.

3. Tank according to one of claims 1 or 2 **characterized in that** the semi-cylindrical casings (6; 12, 13) extend over a little less than half the circumference of the ends (5; 10, 11) of the elements (2, 9) so that seals (18) may be arranged on both the semi-cylindrical casings (6; 12, 13) and on the flaps (8; 16, 17).

4. Tank according to any one of claims 1 to 3 **characterized in that** a seal (18) is provided at the semi-cylindrical casings (6; 12, 13).

5. Tank according to any one of claims 1 to 4 **characterized in that** a seal (18) is also provided at the flaps (8; 16, 17).

6. Tank according to one of claims 4 or 5 **characterized in that** the seals (18) are made of rubber or other synthetic material.

7. Tank according to any one of claims 1 to 6 **characterized in that** the flaps (8; 16, 17) are provided with perforations for their bolting.

8. Tank according to any one of claims 1 to 7 **characterized in that** the length of the semi-cylindrical casings (6; 12, 13) is such that once the assembly of the end elements (2) and possibly the intermediate element(s) (9), the space between two flaps (8; 16, 17) facing each other is 2 to 3mm.

9. Tank according to any one of claims 1 to 8 **characterized in that** it is made of steel or a rigid plastic material, wherein the steel or the rigid plastic material may be corrugated, grooved or smooth.
